(19) Europäisches Patentamt
European Patent Office
Office européen des brevets

(11) Veröffentlichungsnummer: **0 140 324**
**B1**

# (12) EUROPÄISCHE PATENTSCHRIFT

(45) Veröffentlichungstag der Patentschrift: **21.06.89**

(51) Int. Cl.⁴: **C 08 L 81/02**

(21) Anmeldenummer: **84112712.9**

(22) Anmeldetag: **22.10.84**

(54) **Polyarylensulfide mit verminderter Korrosion.**

(30) Priorität: **02.11.83 DE 3339581**

(43) Veröffentlichungstag der Anmeldung: **08.05.85 Patentblatt 85/19**

(45) Bekanntmachung des Hinweises auf die Patenterteilung: **21.06.89 Patentblatt 89/25**

(84) Benannte Vertragsstaaten: **DE FR GB IT**

(56) Entgegenhaltungen:
**EP-A-0 070 010**
**GB-A-1 068 952**
**US-A-3 408 342**
**US-A-3 776 880**
**US-A-3 879 355**
**US-A-4 115 344**

(73) Patentinhaber: **BAYER AG, D-5090 Leverkusen 1 Bayerwerk (DE)**

(72) Erfinder: **Meyer, Rolf- Volker, Dr., Buchheimer Strasse 23, D-4150 Krefeld (DE)**
Erfinder: **Reinking, Klaus, Dr., Robert- Stolz-Strasse 16b, D-5632 Wermelskirchen (DE)**
Erfinder: **Idel, Karsten- Josef, Dr., Scheiblerstrasse 81, D-4150 Krefeld (DE)**
Erfinder: **Dhein, Rolf, Dr., Deswatinesstrasse 30, D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



LIBER, STOCKHOLM 1989

**Beschreibung**

Gegenstand der Erfindung sind Polyarylensulfide (PPS) aus gegebenenfalls substituierten Halogenbenzolen und Polyhalogenaromaten nach bekannten Methoden hergestellt, gegebenenfalls in Kombination mit anderen Polymeren, Füllstoffen und/oder Verstärkungsfasern, die zur Minderung der Abspaltraten saurer, korrosionsverursachender flüchtiger Bestandteile und zur Verbesserung der Fließfähigkeit spezielle N-haltige organische Basen enthalten.

Polyarylensulfide sind bekannt (vgl. US-PS-2 538 941 und 2 513 188). Sie können aus den entsprechenden Halogenaromaten und Alkali- oder Erdalkalisulfiden hergestellt werden.

Aus der US-PS-3 919 177 ist ein Verfahren zur Herstellung von p-Phenylensulfidpolymeren bekannt, bei dem aus p-Dihalogenbenzol, Alkalisulfid, einem organischen Amid und zusätzlich einem Alkalicarboxylat ein p-Phenylensulfidpolymeres mit höherem Molekulargewicht, hergestellt wird.

In der US-PS-4 118 947 ist ein Verfahren zur Herstellung von verzweigten Arylensulfidpolymeren beschrieben, bei dem zusätzlich eine polyhalogenaromatische Verbindung mit mehr als zwei Halogensubstituenten pro Molekül verwendet wird, so daß Polymere mit niedrigem Schmelzindex, die für die Verspinnung zu Fasern geeignet sind, erhalten werden.

Gemäß US-PS-4 096 132 werden unverzweigte p-Polyphenylensulfide mit leicht erhöhter Schmelzviskosität erhalten, wenn in Gegenwart von Alkalicarboxylat, bevorzugt Lithiumacetat und Alkalihydroxiden umgesetzt wird.

Im allgemeinen werden die p-Polyphenylensulfide durch eine Kettenverlängerungs- und Verzweigungsreaktion einem Härtungs- oder Curingschritt unterzogen (z. B. US-PS-3 727 620, US-PS-3 524 835, US-PS-3 839 301). Ohne diesen Härtungsschritt besitzen die Polyphenylensulfide im allgemeinen eine niedrige Schmelzviskosität, die eine thermoplastische Verarbeitung kaum zuläßt.

Gemäß US-PS-3 919 177 soll mit Hilfe von Lithiumcarboxylaten als Katalysator erreicht werden, daß das erzeugte p-Polyphenylensulfid ohne vorherige Härtung zu Fasern schmelzversponnen werden kann. In der US-PS-4 118 947 bzw. DE-OS-2 817 731 wird beschrieben, daß durch eine bestimmte Menge Restwasser bewirkt wird, daß die Polyphenylensulfide ohne Härtungsschritt zu Fasern versponnen und extrudiert sowie formgepreßt werden können.

Trotz ihrer hohen Wärmeformbeständigkeit und Feuerfertigkeit ist der Einsatz von Polyphenylensulfiden oft deshalb behindert, da sowohl bei der Herstellung bzw. der Verarbeitung in Extrudern und auf Spritzgußmaschinen als auch im Praxiseinsatz beim Arbeiten mit Metallen häufig Korrosionserscheinungen festgestellt werden, die entweder die Verarbeitungsmaschinen schädigen und unbrauchbar machen bzw. im Praxiseinsatz, insbesondere bei elektronischen Bauteilen zum Funktionsverlust der Bauteile führen können.

Genaue Untersuchungen zum korrosiven Verhalten von Formteilen aus Polyphenylensulfid sind bekannt (Quella, Kunststoffe 71, S 386 ff (1981)). Es hat nicht an Versuchen gefehlt, durch zusätz verschiedener Additive-die Korrosionseigenschaften von Polyarylensulfiden zu vermindern. So empfiehlt die US-PS-4 017 450 Alkali-Carbonate, -Silicate oder Natriumhydroxid als korrosionsmindernde Additive, die jedoch z. T. nur mäßige Ergebnisse zeigen (Tab. I) und zusätzlich die elektrischen Eigenschaften der Polymerpräparate verschlechtern (Tab. III und IV).

US-PS-4 178 276 beschreibt die Verwendung von Oxalaten von Metallen der Gruppen IA, IIA und IIB des Periodensystems der Elemente nach Mendelejew (Hoffmann, Rüdorff, Anorganische Chemie, S 98, 1966, Vieweg Verlag). Nach der Beispiel-Tabelle erweist sich der erreichbare Effekt als gering und erscheint insbesondere auch zweifelhaft, da bei zunehmender Dosierung des Oxalats die Wirkung kaum zunimmt, gemäß dem Kupferspiegeltest sogar abnimmt.

In den US-PS-4 115 344 werden u.a. Harnstoffe, Hydrazine und Aminosäuren empfohlen. Diese Produkte zersetzen sich jedoch bei den Verarbeitungstemperaturen, wobei sie ihre Wirksamkeit im Polyphenylensulfid (>300°C) verlieren und werden daher aus wäßriger Lösung und durch anschließendes Trocknen aufgetrudelt. Dies erfordert insbesondere bei gefüllten Polyphenylensulfiden neben der Füllstoffeinarbeitung einen zusätzlichen Arbeitsgang.

In der EP-0 070 010 werden eine Reihe verschiedener Vorschläge zur Reduzierung schwefelhaltiger Ausgasmengen gemacht. So sollen Polymere mit aromatischen Aminogruppen, Polyvinylcarbazole, Poly-imide, Polyamide und Polymere mit Ketogruppen wie z. B. Polyetheretherketone und sogar Polybutylenterephthalat entweder als Additive zum Polyphenylensulfid zugemischt oder die für die jeweilige Polymerherstellung verwendeten Bausteine für sich in die Polyphenylensulfid-Polymermoleküle eingebaut werden. Außerdem werden Phenolharze und Triazinderivate wie z. B. 2,4,6-Triphenyltriazin vorgeschlagen. Wie den genannten Meßwerten zu entnehmen ist, sind die erzielbaren Effekte mäßig und wenig schlüssig.

Aus der US-PS-3 408 342 ist bekannt, bestimmte Aminoalkohole der Formel $R_xN(R'OH)_y$, worin R Wasserstoff, eine Alkyl-, Aryl-, Cycloalkyl-, Alkaryl- oder Aralkylgruppe mit 1 bis 8 C-atomen; R' eine Alkylengruppe mit 2 bis 6 C-atomen bedeutet; x eine ganze Zahl von 0 bis 2 und y gleich (3-x) ist, zur Farbverbesserung Polyarylensulfiden zuzusetzen. Deren Effekt bezüglich der sauren Ausgasungen des Polyarylensulfids ist jedoch nicht beschrieben und konnte im entsprechenden Vergleichsversuch 1b auch nicht gefunden werden.

Sollen 0,1 % Polyvinylcarbazol bzw. Polybutylenterephthalat die Menge der korrosiven Ausgasungen halbieren, so erhöhen 0,5 % bzw. 1 % als Zusatz jedoch die Ausgasungsmenge bereits deutlich. Das heißt, die vorgeschlagenen Additive zersetzen das zu schützende Polyphenylensulfid merklich schon bei 200°C.

Bei den für die Verarbeitung von PPS erforderlichen Temperaturen von über 300°C tritt daher nicht nur Korrosion an Maschinen, sondern auch unerwünschter Abbau des PPS-Polymers und der Zusätze ein.

Der Einbau von telechelen Oligomeren, selbst für den Fall einer Stabilisierungswirkung, führt zum Verlust an technisch wichtigem Eigenschaftsniveau, insbesondere bei der Wärmeformbeständigkeit.

Gewünscht wird jedoch eine deutliche Verminderung der sauren Ausgasungen unter Beibehaltung der übrigen guten Eigenschaften der Polyarylensulfide.

Überraschenderweise wurde nun gefunden, daß man Produkte auf Basis von Polyarylensulfid erhält, die erheblich verminderte Abspaltung saurer Gase, auch über längere zeiträume hinweg zeigen und die zusätzlich besseres Fließverhalten bei gleichbleibender Qualität der mechanischen Eigenschaften aufweisen, wenn man in beliebiger Weise hergestellten Polyarylensulfiden in kleinen Mengen spezielle primäre und/oder sekundäre (Poly)amine zusetzt.

Gegenstand der Erfindung sind daher Polyarylensulfide, die 0,1 bis 5 Gew.-%, bevorzugt 0,5 bis 3 Gew.-% (ar)-aliphatische primäre und/oder sekundäre (Poly)amine, deren Siedepunkt 150 - 450°C, vorzugsweise mindestens 250°C beträgt, enthalten, welde der Formel I,

$$X \left( \begin{matrix} H \\ N-R \end{matrix} \right)_n \qquad (I),$$

entsprechen in welcher

X für einen n-wertigen, gegebenenfalls mit Kohlenwasserstoffverzweigungen substituierten - aliphatischen $C_1$-$C_{30}$-Kohlenwasserstoffrest, in dem maximal jedes dritte Kettenglied auch ein O-Atom oder eine NH-Gruppe sein kann, - cycloaliphatischen $C_5$-$C_{30}$-Kohlenwasserstoffrest, - araliphatischen $C_7$-$C_{30}$-Kohlenwasserstoffrest,

R für H, $C_1$-$C_{30}$-Alkyl, $C_7$-$C_{30}$-Aralkyl, $C_5$-$C_{30}$-Cycloalkyl,

n für eine ganze Zahl von 1 bis 6, vorzugsweise 1 bis 3 steht und

X und R auch Glieder gemeinsamer, gegebenenfalls $C_1$-$C_3$-alkylsubstituierter heterocyclischer Ringe mit 5 bis 12, vorzugsweise 5 bis 7, Ringgliedern sein können,

wobei die Aminoalkohole der Formel $R_xN(R'OH)_y$, worin R Wasserstoff eine Alkyl- Aryl- Cycloalkyl-, Alkaryl- oder Aralkylgruppe mit 1 bis 8 C-Atomen; R' eine Alkylengruppe mit 2 bis 6 C-Atomen bedeutet; x eine ganze Zahl von 0 bis 2 und y gleich (3-x) ist, ausgenomnen sind.

Beispiele für erfindungsgemäß einzusetzende (Poly)amine sind:

a) Monoamine

α) primäre Amine

Heptylamin-1, Octylamin-1, Octylamin-2, Dodecylamin, Stearylamin, Cyclooctylamin, Cyclododecylamin, 1-Hydroxy-3-aminomethyl-3,5,5-trimethylcyclohexan, Benzylamin, 1- und 2-Phenylethylamind, Homoveratrylamin; Aminother, z. B. (Ethylhexyl)-(3-aminopropyl)-ether.

β) sekundäre Amine

Heptamethylenimin, 2,2,6,6-Tetramethylpiperidin, 4-Hydroxy-2,2,6,6-tetramethylpiperidin, Di-n-butylamin, Di-n-pentylamin, Di-n-hexylamin, Dioctylamin, Dicyclohexylamin, Dibenzylamin.

γ) Amidine vom Imidazolintyp bzw. vom Tetrahydropyrimidin-Typ, z. B. folgende Imidazoline:

2-Phenylimidazolin, 2-Phenyl-4-methylimidazolin, 2-(m-Tolyl)-4-methyl-imidazolin, 2-(m-Pyridyl)-imidazolin, 1,4-Tetramethylen-bis-(4-methyl-imidazolin), 2-Methyl-imidazolin, 2,4-Dimethyl-imidazolin, 2-Ethyl-imidazolin, 2-Ethyl-4-methyl-imidazolin, 2-Benzyl-imidazolin, 2-(o-Tolyl)-imidazolin, 2-(p-Tolyl)-imidazolin, Tetramethylen-bis-(imidazolin), 1,1,3-Trimethyl-1,4-tetramethylen-bis-imidazolin, 1,1,3-Trimethyl-1,4-tetramethylen-bis-(4-methyl-imidazolin), 1,3,3-Trimethyl-1,4-tetramethylen-bis-(4-methyl-imidazolin), 1,2-Phenylen-bis-imidazolin, 1,3-Phenylen-bis-(4-methyl-imidazolin). Es können Gemische der Imidazolin-Derivate eingesetzt werden; besonders bevorzugt werden 2-Phenyl-imidazolin und 2-Methyl-imidazolin.

Bevorzugte Tetrahydropyrimidine sind z. B. 2-Methyl-tetrahydropyrimidin, 2,4-, 2,5- und 2,6-Dimethyltetrahydropyrimidin, 2-Ethyltetrahydropyrimidin, 2-Ethyl-4-methyl-tetrahydropyrimidin, 2-Benzyltetrahydropyrimidin, 2-Phenyl-tetrahydropyrimidin, 2-Phenyl-4-methyl-, -5-methyl- und -6-methyl-tetrahydropyrimidin, 2,4-Diaza-3-phenyl-7,9,9- und -7,7,9-trimethylbicyclo(4,3,0)-nonen-2, 2,4-Diaza-3-methyl-7,9,9- und -7,7,9-trimethyl-bicyclo(4,3,0)-nonen-2 und Gemische dieser Tetrahydropyrimidine.

Vorzugsweise werden Tetrahydropyrimidine eingesetzt.

b) Diamine

Hexamethylendiamin, 2,2,4-(2,4,4)-Trimethylhexamethylendiamine, Octamethylendiamin, Decamethylendiamin, Dodecamethylendiamin, 2-Ethyl-octamethylendiamin, 1,1-10,10-disubstituierte 1,11-Diaminoundecane (z. B. nach EP-A-0 077 298), 1,2-, 1,3-, 1,4-Diaminocyclohexan, Hydrierungsprodukte der Toluylendiamine, 1,3-1,4-Bis(methylamino)cyclohexan, m- und p-Xylylendiamin, 1,8-Diamino-p-menthan, Isophorondiamin, 1-Amino-2-aminomethyl-3,3,4(3,5,5)-trimethylcyclopentan, 1,5-Diaminocyclooctan, Bis-(methylamino)cyclooctane, Bis-methylamino-tricyclodecane (TCD-Diamine® der Hoechst AG); Polyetherdiamine, hergestellt aus Diolen, Ethylenoxid, Propylenoxid, Tetrahydrofuran und gegebenenfalls langkettigen $C_8$-$C_{18}$-Epoxiden und anschließende Aminierung, mit Mol-Gew. Mn bis zu 2.000; Diaminodicyclohexylmethane mit bis zu 2 $C_1$-$C_4$-Alkylsubstituenten pro Ring, vorzugsweise 4,4'-Diaminodicyclohexylmethan, N-Aminoethylpiperazin, 1,3-Di-4-Piperidyl-propan, Homopiperazin.

c) Polyamine

α) nur primäre Aminogruppen enthaltende Polyamine

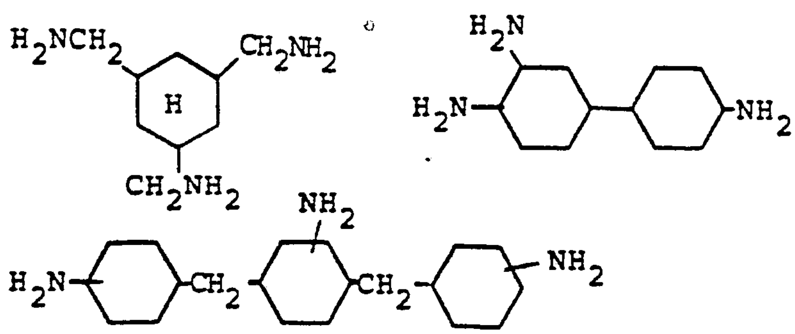

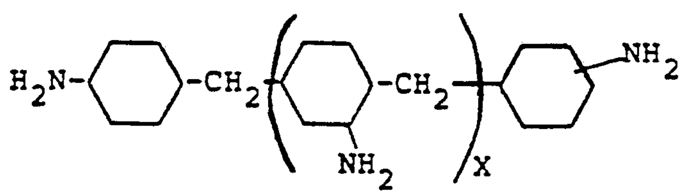

Technische Gemische aus x = 0 - 5

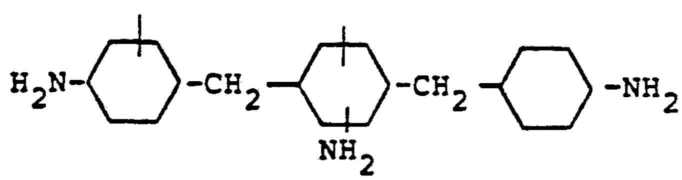

1,5,9-Triaminocyclododecan, Tris-methylamino-cyclododecane, Hydrierungsprodukte von Präparaten durch Addition von Acrylnitril an Keto-Verbindungen

(z.B.) 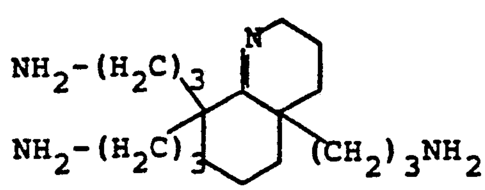

;

Polyetherpolyamine sind z. B. solche, hergestellt aus Trimethylolpropan, Glycerin, Pentaerythrit, Sorbit, durch Umsetzung mit Ethylenoxid, Propylenoxid, Tetrahydrofuran, Decen-1-oxid, Dodecen-1-oxid oder Mischungen mit nachträglicher Aminierung mit $M_n$ 400 bis 5.000. Vorzugsweise werden Polyether aus Trimethylolpropan und Ethylenoxid/Propylenoxid mit Molgewichten $M_n$ = 500 bis 1.500 eingesetzt.

β) Sonstige Amine, welche primäre, sekundäre und gegebenenfalls tertiäre Aminogruppen enthalten;

Triethylentetramin, $[H_2N\text{-}(CH_2)_6]_2\text{-}NH$, Polyamine aus Dicyclopentadien und höherkernigen Oligocyclopentadienen (EP 26 983), vorzugsweise

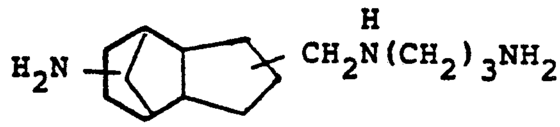

Vorzugsweise werden von den erfindungsgemäß zu verwendenden (ar)aliphatischen (Poly)aminen jene mit Siedepunkten von mindestens 250°C, besonders bevorzugt cycloaliphatische Molekülteile enthaltende (Poly)amine eingesetzt wie Diaminodicyclohexylmethan, Hydrierungsprodukte höhermolekularer n-kerniger-n-Aminoverbindungen, erhalten durch Kondensation von Anilin und Formaldehyd, Dicyclohexylamin, Piperidin-Derivate sowie die bicyclischen Amidine des Tetrahydropyrimidintyps mit der Formel

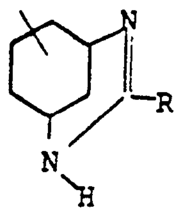

(- ≙ $CH_3$-)

Diese (Poly)amine können erfindungsgemäß einzeln oder als Mischungen in Konzentrationen von 0,1 bis 5 Gew.-%, vorzugsweise 0,5 bis 3 Gew.-%, den Polyarylensulfiden, vorzugsweise nach deren Herstellung, zugesetzt werden.

Thermoplastisch verarbeitbare Formmassen enthalten 0,5 bis 5 Gew.-Teile Mono-amine, die gegebenenfalls Hydroxy-substituiert, cycloaliphatisch, heterocyclisch sein und/oder (Poly)ether-reste enthalten können.

Die erfindungsgemäßen Formmassen können weiterhin enthalten 0,5 bis 5 Gew.-Teile von Diaminen mit mindestens 6 C-Atomen, die gegebenenfalls Hydroxy-substituiert, cycloaliphatisch, heterocyclisch sein können und/oder Polyetherreste enthalten können.

Erfindungsgemäß können Amine mit mehr als 2 Aminogruppen eingesetzt werden.

Erfindungsgemäß können cycloaliphatische oder N-heterocyclische Aminen eingesetzt werden.

Die Zugabe erfolgt besonders bevorzugt bei der Kompaktierung von faserförmig anfallenden Polymeren oder durch Compoundierung über geeignete Mischmaschinen, vorzugsweise in Doppelwellenextrudern über die Schmelze, gegebenenfalls gemeinsam mit anderen Hilfsstoffen oder zuschlagstoffen wie Glasfasern oder Füllstoffen.

Mit den Aminen erfindungsgemäß ausgerüstet werden können Polyarylensulfide, die nach bekannten Verfahren aus bekannten Ausgangsstoffen aus Schwefelspendern wie $Na_2S$ und (Poly)halogenaromaten gewonnen werden, z. B. Dihalogenaromaten wie m-Dichlorbenzol, p-Dichlorbenzol, p-Dibrombenzol, m-Dibrombenzol und 1-Chlor-4-brombenzol;

substituierten Dihalogenaromaten wie 2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5,-Tetramethyl-3,6-dichlorbenzol, 1-Cyclohexyl-2,5-dichlorbenzol, 1-Phenyl-2,5-dichlorbenzol, 1-Benzyl-2,5-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol;

Tri- oder Tetrahalogenaromaten wie 1,2,3-Trichlorbenzol, 1,2,4-Trichlorbenzol, 1,2,4-Tribrombenzol, 1,3,5-Trichlor-1,4,6-trimethylbenzol, 1,2,3-Trichlornaphthalin, 1,2,4-Trichlornaphthalin, 1,2,6-Trichlornaphthalin, 2,3,4-Trichlortoluol, 2,4,6-Trichlortoluol, 1,2,3,4-Tetrachlornaphthalin, 1,2,4,5-Tetrachlorbenzol, 2,2'-4,4'-Tetrachlorbephenyl, 1,3,5-Trichlor-trazin;

mehrkernigen halogenierten Verbindungen wie Bis-(4-chlorphenyl)-ether, Bis-(4-chlorphenyl)-sulfid, Bis-(4-bromphenyl)-sulfid, Bis-(4-chlorphenyl)-sulfon, Bis-(4-bromphenyl)-sulfon, Bis-(4-chlorphenyl)-keton, Bis-(4-chlorphenyl)-methan, 2,2-Bis-(p-chlorpenyl)-propan, 4,4'-Dichlorbenzolbiphenyl, 4,4'-Dibrombiphenyl, 2,6-Dichlorpyridin, 2,5-Dichlorthiophen.

Alle aufgeführten Verbindungen können einzeln oder im Gemisch eingesetzt werden.

Die erfindungsgemäßen Polyarylensulfide können mit anderen Polymeren, mit Pigmenten und Füllstoffen, beispielsweise Graphit, Metallpulver, Glaspulver, Quarzmehl oder Glasfasern gemischt oder mit den für Polyarylensulfide üblichen Additiven, beispielsweise üblichen Stabilisatoren oder Entformungsmitteln, versetzt werden.

Zur Bestimmung der Abspaltraten saurer Gase wurden - wie im Detail bei den Beispielen beschrieben - definierte Mengen von Polyarylensulfiden in Glaskolben aufgeschmolzen und bei definierter Temperatur eine konstant bemessene Menge Luft durch die gut gerührte Schmelze durchgeleitet.

Die Abgase wurden in überschüssiger N/100-NaOH aufgefangen und der Säuregehalt durch Rücktitration quantitativ bestimmt. Zur Beobachtung der Abgascharakteristik in Abhängigkeit von der Zeit wurden z. B. alle 5 min. oder alle 10 min. die NaOH-Vorlage gewechselt.

Während nach diesem Verfahren sehr unterschiedliches Verhalten verschiedener Polyarylensulfide festgestellt werden konnte, wurde durch Mitverwendung der erfindungsgemäß einzusetzenden (Poly)amine, die im Labormaßstab dem Granulat vor dem Aufschmelzen zugegeben bzw. im technischen Maßstab bei der Compoundierung zugesetzt wurden, bei allen betrachteten Polymerproben über längere Zeit eine Vermeidung oder zumindest drastische Verminderung der Abspaltraten saurer Gase gemessen.

Je nach Herstellungsverfahren und insbesondere in Abhängigkeit von der Verzweiger-Konzentration (Mitverwendung von mindestens 3-funktionellen Halogenaromaten bei der Polymersynthese) bzw. von der Polymerherstellung nachgeschalteten "curing"-Schritten lassen sich sehr verschiedene Polyarylensulfide erhalten.

So sind nicht oder wenig verzweigte Polyarylensulfide relativ niedrigviskose Materialien mit sehr niedriger Schmelzviskosität, die sich nur als Vergußmassen eignen, deren mechanische Eigenschaften jedoch den Anforderungen an thermoplastische Werkstoffe bei weitem nicht genügen.

Hoch verzweigte bzw. nachträglich verzweigte ("Curing") Polyarylensulfide weisen zwar sehr gute mechanische Eigenschaften auf, sind jedoch als Folge einer sehr hohen Viskosität der Schmelze auch noch über 300°C nur sehr schwer zu verarbeiten.

Völlig überraschend war daher die Beobachtung, daß die erfindungsgemäß den Polyarylensulfiden zuzusetzenden (ar)aliphatischen (Poly)amine das Fließverhalten der Polymeren drastisch verbessern, ohne daß ein merklicher Verlust an mechanischen Eigenschaften und damit an Gebrauchsgualität festgestellt wird.

Auch das Zähigkeitsverhalten wird gegebenenfalls sogar noch verbessert.

Das Schmelzfließverhalten der Polyarylensulfide kann nach DIN 53735 bei 306°C unter Verwendung einer 2,16 kg Last gemessen und in g/10 min. angegeben werden.

Es wurde deshalb die Schmelzviskosität $\eta_m$ der Polymerschmelze (m Pa.s) bei 306°C in Abhängigkeit von der Schubspannung $\tau$ (in Pa) mit Hilfe des Instron-Rotationsviskosimeters bestimmt. Man kann auf diese Weise die Schmelzviskosität in einem sehr weiten Bereich von $10^{-1}$ bis $10^{-7}$ Pa.s bestimmen. Im Instron-Rheometer wird das Polymer zwischen einer festen Platte und einem drehbaren Kegel aufgeschmolzen und das Drehmoment des Kegels bestimmt. Aus Drehmoment, Winkelgeschwindigkeit und apparativen Daten kann die Schmelzviskosität in Abhängigkeit von der Schubspannung errechnet werden. Verwendet wurde ein Rheometer Modell 3250 der Fa. Instron; Durchmesser des Kegels und der Platte 2 cm.

Angegeben wird die Schmelzviskosität, die bei einer Schubspannung von $\tau = 10^2$ Pa gemessen wird.

Die erfindungsgemäßen Polyarylensulfide können direkt durch Extrusion, Extrusionsblasen, Spritzgießen oder sonst übliche Verarbeitungstechniken zu Folien, Formkörpern oder Fasern verarbeitet werden. Diese können in üblicher Weise Verwendung finden, z. B. als Automobilteile, Armaturen, Elektroteile wie Schalter, elektronische Tafeln, chemikalienresistente Teile und Apparate wie Pumpengehäuse und Pumpenflügelräder, Ätzbadschalen, Dichtungsringe, Teile von Büromaschinen und Fernmeldeeinrichtungen, sowie als Haushaltsgeräte, Ventile, Kugellagerteile etc.

**Beispiele**

**Beispiel 1A**

20,0 g eines handelsüblichen Polyphenylensulfids mit einer Schmelzviskosität $\eta_m$ bei 306°C von 4.500 Pa.s ("RYTON P 4® = PPS 1) und 0,4 g Stearylamin (2 % bezogen auf Polymer) wurden in einem 100 ml Kolben eingewogen, auf den ein Kondensationsaufsatz mit 3 Schliffen aufgesetzt wurde (Rührer, Luftzufuhr, Gasableitung). Mit Hilfe eines Salzbades wird das PPS unter Rühren auf 320°C erhitzt. Ab Erreichen dieser Temperatur werden konstant 5 l Luft/h über die gerührte Polymerschmelze geführt und die ausgetragenen Gase in einer mit 100 ml N/100 NaOH gefüllten Vorlage aufgefangen. Die Vorlage wird genau nach jeweils 5 Minuten erneuert und die Menge der aufgefangenen sauren Gase gegen Phenolphthalein mit N/10 HCl zurücktitriert.

Die nach 20 Minuten, 30 Minuten und 60 Minuten gemessenen Abspaltraten saurer Gase wurden zur Charakterisierung des PPS-Präparates und zum Vergleich mit anderen PPS-Präparaten herangezogen. Der 30 Minuten-Wert ist in Tabelle 1 aufgeführt.

<u>Vergleichsversuch 1a</u>

Beispiel 1 wird wiederholt, jedoch ohne den Zusatz von 2 % Stearylamin. Die Abspaltraten saurer Gase, aufgeführt in Tabelle 1, sind deutlich höher.

<u>Vergleichsversuche 1b - e</u>

Triethanolamin, Diaminodiphenylmethan, Bis-(2-dimethylamino-ethyl)-methylamin und N-Cyclohexylanilin zeigen unter den Versuchsbedingungen nach Beispiel 1A keine Verminderung der Abspaltraten saurer Gase.

**Beispiele 1B bis 1Q**

Wie in Beispiel 1A beschrieben, werden dem in Beispiel 1A verwendeten Polyphenylensulfid jeweils 2 Gew.-% der in Tabelle 1 aufgeführten (Poly)amine B - Q zugesetzt und, wie in Beispiel 1 beschrieben, die so modifizierten Polymeren charakterisiert (Tabelle 1).

**Beispielserie 2A bis 2Q**

Wie in Beispiel 1A beschrieben wird ein handelsübliches Polyphenylensulfid mit einer Schmelzviskosität $\eta_m$ von 5,8 Pa.s (bei 306°C) - RYTON VI® = PPS 2 - mit den in Tabelle 1 aufgeführten (Poly)aminen A - Q ausgerüstet und behandelt. Die nach 30 Minuten bestimmten Abspaltraten saurer Gase sind in Tabelle 1 aufgeführt.

**Beispielserie 3A bis 3Q**

Wie in Beispiel 1A beschrieben wird ein nicht verzweigtes Polyphenylensulfid mit einer Schmelzviskosität $\eta_m$ von 0,1 Pa.s (PPS 3) mit den in Tabelle 1 aufgeführten (Poly)aminen A - Q ausgerüstet und behandelt. Die nach 30 Minuten bestimmten Abspaltraten saurer Gase sind in Tabelle 1 aufgeführt.

**Tabelle 1:** Abspaltraten saurer Gase nach jeweils 30 Minuten aus PPS 1 - 3 und (Poly)aminen

| Beispiele | | 1<br>PPS 1 | 2<br>PPS 2 | 3<br>PPS 3 |
|---|---|---|---|---|
| Vergleichsversuch ohne Polyamin | | 3,6 | 5,0 | 7,4 |
| A | $C_{18}H_{37}NH_2$ | - | 3,1 | 4,5 |
| B | $H_2N(CH_2)_{10}NH_2$ | - | 1,1 | 1,5 |
| C | Poly-BD-Telechel mit $NH_2$-terminiert (Endgruppen) | - | - | 2,0 |
| D | 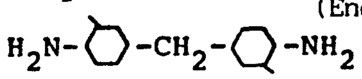 | 0,6 | - | 1,5 |
| E | 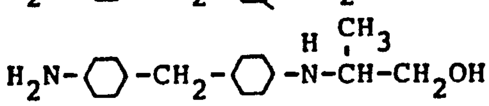 | - | 0,8 | 1,0 |
| F | 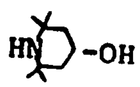 | 1,0 | - | 1,9 |
| G | 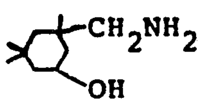 | - | 1,0 | 1,4 |
| H | 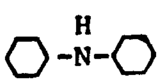 | 0 | - | 0,6 |
| I | 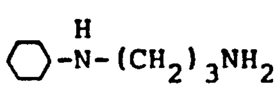 | - | 0,8 | 0,8 |
| K | 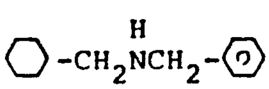 | 0,6 | 1,0 | 1,0 |

**Tabelle 1** Fortsetzung

| Beispiele | | 1 | 2 | 3 |
|---|---|---|---|---|
| L | 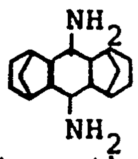 | 0,8 | 0,7 | 1,5 |
| M | Tris-methylamino-cyclododecan | - | 1,15 | 2,0 |
| N | 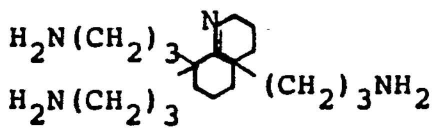 | - | 0 | 1,0 |
| P | 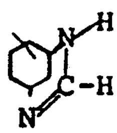 | 1,0 | 1,4 | 2,3 |
| Q | 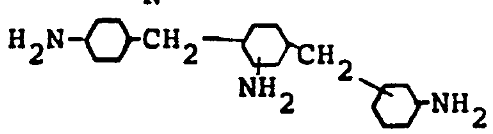 | 0,5 | 0,8 | 2,0 |

- = nicht geprüft

**Beispiel 4**

5,0 kg des auch in Beispiel 1 verwendeten PPS-Granulats werden nach 3-stündiger Vortrocknung bei 130°C in einen Doppelwellenextruder des Typs ZSK 32 gefördert, gleichzeitig gleichmäßig 50 g des auf 100°C erwärmten Diamin E zudosiert (1 Gew.-% bezogen auf Polymer) und bei 320°C gemeinsam extrudiert.

Die Kraftaufnahme im Extruder ist gegenüber der Extrusion des Polymeren allein um 40 % verringert. Das Aminmodifizierte Polyphenylensulfid wird als Strang in ein Wasserbad abgesponnen und granuliert. Das gut getrocknete Granulat wird zu Normkleinstäben verspritzt, an denen im Vergleich zum unmodifizierten Polymeren praktisch gleichbleibende Zähigkeitswerte (nach DIN 53 453: $a_n \approx 5$ kJ/m², $a_k \approx 1$ kJ/m²) bei erhöhter Kugeldruckhärte $H_{30}$ (DIN 53 456; 185 N/mm gegen 163 N/mm) festgestellt werden.

Der am Granulat gemessene Schmelzindex (MFI nach DIN 53 735, 306°C, 2,16 kg Last) hat sich von 2,5 g/10 min. auf 25 g/10 min. erhöht, so daß sich bei gleichbleibend guten Eigenschaften eine erheblich verbesserte Verarbeitbarkeit ergibt. Die Abspaltrate saurer Gase, gemessen wie bei Beispiel 1A beschrieben, betrug nach 30 Minuten 1,1 (unmodifiziertes Polymer: 3,6).

<u>Vergleichsversuch 4</u>

Beispiel 4 wird wiederholt, aber als Additiv 1 Gew.-% Harnstoff zugesetzt. Man erhält nach dem Extrudieren einen Strang aus aufgeschäumtem Polymer. Die Abspaltrate saurer Gase, gemessen wie in Beispiel 1A beschrieben, beträgt 3,7.

**Beispiel 5**

4,40 kg eines verzweigten Polyphenylensulfids mit einer Schmelzviskosität $\eta_m$ von 110 Pa.s, hergestellt gemäß EP-0 065 689, werden mit 2,6 kg eines 1 : 1-Gemisches aus Talkum und Kaolin und 3,0 kg handelsüblichen Glasfasern Silenca 8041®) sowie 100 g des Diamins E über einen Doppelwellenextruder des Typs ZSK 32 bei 320°C Maßetemperatur compoundiert, der gefüllte und verstärkte Thermoplast als Strang in ein Wasserbad abgesponnen und zu Granulat zerhackt.

Nach guter Trocknung bis zu einem Wassergehalt von 0,2 % wurde die Schmelzviskosität des Compounds gemessen sowie an gespritzten Prüfkörpern die Schlagzähigkeit, Kugeldruckhärte und die Wärmeformbeständigkeit ermittelt. Die gemessenen Werte enthält Tabelle 2.

Vergleichsversuch 5

Beispiel 5 wurde wiederholt, jedoch ohne den Zusatz des Diamins E. Die bestimmten Eigenschaften sind in Tabelle 2 aufgeführt.

**Beispiel 6**

Analog Beispiel 5 wird ein Compound hergestellt, der jedoch 44 Gew.-Teile, eines verzweigten PPS, hergestellt gemäß EP-0 065 689 mit einer Schmelzviskosität $\eta_m$ = 890 Pa.s und 1 Gew.-Teil des Triamins Q enthält. Die, wie in Beispiel 5 beschrieben, bestimmten Produktdaten sind in Tabelle 2 aufgeführt.

Vergleichsversuch 6

Beispiel 6 wird wiederholt, jedoch ohne den Zusatz des Triamins. Die bestimmten Produktdaten sind in Tabelle 2 aufgeführt.

**Tabelle 2**

Eigenschaftsvergleiche von mineralverstärkten PPS-produkten mit und ohne (Poly)amin

| | | Beispiel 5 | Vergleichsv. 5 | Beispiel 6 | Vergleichsv. 6 |
|---|---|---|---|---|---|
| $\eta_m$ des Basis-PPS | | 110 Pa.s | 110 Pa.s | 890 Pa.s | 890 Pa.s |
| Mineral-verstärkte Produkte: | | | | | |
| Viskosität in | 10 $sec^{-1}$ | 130 | 750 | 1.300 | 7.500 |
| Abh. vom Schergefälle | 100 $sec^{-1}$ | 100 | 380 | 1.000 | 1.150 |
| bei 310° C | 1.000 $sec^{-1}$ | 80 | 160 | 300 | 450 |
| Schlagzähigkeit (kJ/$m^2$) | | 10 | 7 | 8 | 6 |
| Kugeldruckhärte | | 330 | 336 | 311 | 30 |
| 4 Vicat VST/A (° C) | | 250 | 250 | 250 | 250 |

**Patentansprüche**

1. Thermoplastisch verarbeitbare Formmassen aus Polyarylensulfiden, dadurch gekennzeichnet, daß sie 0,1 bis 5 Gew.-Teile bezogen auf den Gehalt an Polyarylensulfid (ar)aliphatische primäre und/oder sekundäre (Poly)amine, deren Siedepunkte 150° C - 450° C betragen, enthalten, welche der Formel

$$X(\overset{H}{N}R)_n \qquad (I)$$

entsprechen, wobei

X ein n-wertiger, gegebenenfalls mit einer OH-Gruppe substituierter - aliphatischer $C_1$-$C_{30}$-Kohlenwasserstoffrest, in dem maximal jedes dritte Kettenglied auch ein O-Atom oder eine NH-Gruppe sein kann, - cycloaliphatischer $C_5$-$C_{30}$-Kohlenwasserstoffrest, - araliphatischer $C_7$-$C_{30}$-Kohlenwasserstoffrest,

R H, $C_1$-$C_{30}$-Alkyl, $C_7$-$C_{30}$-Aralkyl, $C_5$-$C_{30}$-Cycloalkyl,

n eine ganze Zahl von 1 - 6 ist und

X und R auch Glieder gemeinsamer, gegebenenfalls $C_1$-$C_3$-alkylsubstituierter heterocyclischer Ringe mit 5 bis 12 Ringgliedern sein können, wobei die Aminoalkohole der Formel $R_xN(R'OH)_y$, worin R Wasserstoff, eine Alkyl-, Aryl-, Cycloalkyl-, Alkaryl- oder Aralkylgruppe mit 1 bis 8 C-Atomen; R' eine Alkylengruppe mit 2 bis 6 C-Atomen bedeutet; x eine ganze Zahl von 0 bis 2 und y gleich (3-x) ist, ausgenommen sind.

2. Thermoplastisch verarbeitbare Formmassen nach Anspruch 1, dadurch gekennzeichnet, daß sie 0,5 bis 5 Gew.-% Amidine des Imidazolintyps und/oder des Tetrahydropyrimidin-Typs enthalten.

3. Thermoplastisch verarbeitbare Formmassen nach Anspruch 1, dadurch gekennzeichnet, daß 0,5 bis 5 Gew.-Teile Mono-amine, die gegebenenfalls Hydroxysubstituiert, cycloaliphatisch, heterocyclisch sein und/oder (Poly)ether-reste enthalten können, eingesetzt werden.

4. Thermoplastisch verarbeitbare Formmassen nach Anspruch 1, dadurch gekennzeichnet, daß 0,5 bis 5

Gew.-Teile von Diaminen mit mindestens 6 C-Atomen, die gegebenenfalls Hydroxy-substituiert, cycloaliphatisch, heterocyclisch sein und/oder Polyetherreste enthalten können, eingesetzt werden.

5. Thermoplastisch verarbeitbare Formmassen nach Anspruch 1, dadurch gekennzeichnt, daß Amine mit mehr als 2 Aminogruppen eingesetzt werden.

6. Thermoplastisch verarbeitbare Formmassen nach Anspruch 1, dadurch gekennzeichnet, daß cycloaliphatische oder N-heterocyclische Amine eingesetzt werden.

## Claims

1. Thermoplastic moulding compositions of polyarylene sulfides, characterized in that they contain 0.1 to 5 parts by weight, based on the polyarylene sulfide content, of (ar)aliphatic primary and/or secondary (poly)amines having boiling points of 150 to 450°C and corresponding to the formula

$$X(\overset{H}{\overset{|}{N}}R)_n \qquad (I)$$

in which

X represents an n-functional, optionally OH-substituted - aliphatic $C_1$-$C_{30}$ hydrocarbon radical, in which at most every third chain member may even be an O atom or an NH group, - cycloaliphatic $C_5$-$C_{30}$ hydrocarbon radical, - araliphatic $C_7$-$C_{30}$ hydrocarbon radical,

R represents H, $C_1$-$C_{30}$ alkyl, $C_7$-$C_{30}$ aralkyl, $C_5$-$C_{30}$ cycloalkyl,

n is an integer of 1 to 6 and

X and R may even be members of common, optionally $C_1$-$C_3$-alkyl-substituted heterocyclic rings containing from 5 to 12 ring members,

aminoalcohols corresponding to the formula $R_xN(R'OH)_y$, in which R is hydrogen, an alkyl, aryl, cycloalkyl, alkaryl or aralkyl group containing 1 to 8 C atoms; R' is an alkylene group containing 2 to 6 C atoms; x is an integer of 0 to 2 and y = (3-x) being excluded.

2. Thermoplastic moulding compositions as claimed in claim 1, characterized in that they contain 0.5 to 5 % by weight amidines of the imidazoline and/or tetrahydropyrimidine type.

3. Thermoplastic moulding compositions as claimed in claim 1, characterized in that 0.5 to 5 parts by weight of monoamines which may optionally be hydroxy-substituted, cycloaliphatic and heterocyclic and/or may contain (poly)ether groups, are used.

4. Thermoplastic moulding compositions as claimed in claim 1, characterized in that from 0.5 to 5 parts by weight of diamines containing at least 6 carbon atoms, which may optionally be hydroxy-substituted, cycloaliphatic, heterocyclic and/or may contain polyether groups, are used.

5. Thermoplastic moulding compositions as claimed in claim 1, characterized in that amines containing more than 2 amino groups are used.

6. Thermoplastic moulding compositions as claimed in claim 1, characterized in that cycloaliphatic or N-heterocyclic amines are used.

## Revendications

1. Mélanges à mouler susceptibles de mise en oeuvre thermoplastique à base de polyarylènesulfures, caractérisés en ce qu'ils contiennent 0,1 à 5 parties en poids, par rapport à la teneur en polyarylènesulfure, de (poly)amines (ar)aliphatiques primaires et/ou secondaires dont les points d'ébullition vont de 150 à 450°C, qui répondent à la formule

$$X(\overset{H}{\overset{|}{N}}R)_n \qquad (I)$$

X est un reste de valence n, éventuellement substitué avec un groupe OH - d'un hydrocarbure aliphatique en $C_1$ à $C_{30}$, dans lequel au maximum un chaînon sur trois peut être également un atome d'oxygène ou un groupe NH, - d'un hydrocarbure cycloaliphatique en $C_6$ à $C_{30}$, - d'un hydrocarbure araliphatique en $C_7$ à $C_{30}$,

R représente H, un groupe alkyle en $C_1$ à $C_{30}$, aralkyle en $C_7$ à $C_{30}$, cycloalkyle en $C_5$ à $C_{30}$,

n est un nombre entier de 1 à 6 et

X et R peuvent également être des chaînons de noyaux hétérocycliques communs, constitués de 5 à 12 chaînons, portant éventuellement des substituants alkyle en $C_1$ à $C_3$,

les aminoalcools de formule $R_xN(R'OH)_y$ dans laquelle R est l'hydrogène, un groupe alkyle, aryle, cycloalkyle, alkaryle ou aralkyle ayant 1 à 8 atomes de carbone; R' est un groupe alkylène de 2 à 6 atomes de carbone; x est un nombre entier de 0 à 2 et y est égal à (3-x), étant exclus.

2. Mélanges à mouler susceptibles de mise en oeuvre thermoplastique suivant la revendication 1, caractérisés en ce qu'ils contiennent 0,6 à 5 % en poids d'amidines du type imidazoline et/ou du type tétrahydropyrimidine.

3. Mélanges à mouler susceptibles de mise en oeuvre thermoplastique suivant la revendication 1, caractérisés en ce qu'on utilise 0,6 à 6 parties en poids de mono-amines, qui peuvent être cycloaliphatiques, hétérocycliques, éventuellement substituées par des groupes hydroxy et/ou qui peuvent contenir des restes (poly)éther.

4. Mélanges à mouler susceptibles de mise en oeuvre thermoplastique suivant la revendication 1, caractérisés en ce qu'on utilise 0,5 à 5 parties en poids de diamines ayant au moins 6 atomes de carbone, qui peuvent être cycloaliphatiques, hétérocycliques, éventuellement substituées par des groupes hydroxy et/ou qui peuvent contenir des restes polyéther.

5. Mélanges à mouler susceptibles de mise en oeuvre thermoplastique suivant la revendication 1, caractérisés en ce qu'on utilise des amines ayant plus de 2 groupes amino.

6. Mélanges à mouler susceptibles de mise en oeuvre thermoplastique suivant la revendication 1, caractérisés en ce qu'on utilise des amines cycloaliphatiques ou hétérocycliques azotées.